Europäisches Patentamt

European Patent Office

Office européen des brevets

(19)

(11) Veröffentlichungsnummer: **0 048 941**
A2

(12) **EUROPÄISCHE PATENTANMELDUNG**

(21) Anmeldenummer: 81107536.5

(22) Anmeldetag: 22.09.81

(51) Int. Cl.³: **G 06 F 15/20**

(30) Priorität: 29.09.80 DE 3036711

(43) Veröffentlichungstag der Anmeldung: 07.04.82
Patentblatt 82/14

(84) Benannte Vertragsstaaten: CH FR GB IT LI NL

(71) Anmelder: SIEMENS AKTIENGESELLSCHAFT Berlin
und München, Postfach 22 02 61,
D-8000 München 22 (DE)

(72) Erfinder: Walz, Joachim, Dipl.-Ing., Mörikeweg 2,
D-7316 Köngen (DE)

(54) **Verfahren zum Verkleinern von grafischen Mustern.**

(57) Die Erfindung bezieht sich auf ein Verfahren und eine
Anordnung zum Verkleinern von grafischen Mustern, die
durch Binärzeichen codiert sind und in Zeilen und Spalten
eines vorgegebenen Rasters dargestellt werden.
    Die Verkleinerung erfolgt durch eine Verminderung der
Binärzeichen. Zunächst werden die die Zeilen darstellenden Binärzeichen und anschließend die die Spalten darstellenden Binärzeichen entsprechend der gewünschten Verkleinerung vermindert. Bei der Verminderung der Binärzeichen wird darauf geachtet, daß die Struktur der grafischen
Muster möglichst gut erhalten bleibt.

SIEMENS AKTIENGESELLSCHAFT
Berlin und München

Unser Zeichen
VPA

80 P 2411 E

## Verfahren zum Verkleinern von grafischen Mustern

Die Erfindung bezieht sich auf ein Verfahren zum Verkleinern von grafischen Mustern, die durch Binärzeichen codiert sind und die in Zeilen und Spalten eines vorgegebenen Rasters dargestellt werden. Weiterhin bezieht sich die Erfindung auf eine Anordnung zur Durchführung des Verfahrens.

Der Telekommunikationsdienst "Bildschirmtext" bietet die Möglichkeit, neben alphanumerischen Zeichen auch grafische Muster auf dem Bildschirm eines Fernsehgeräts darzustellen. Die grafischen Muster werden aus einzelnen Grafikelementen zusammengesetzt. Jede auf dem Bildschirm darstellbare Bildschirmtextseite besteht bei einer Grafikeingabe aus $80 \cdot 72 = 5760$ Grafikelementen. Sechs solche Grafikelemente sind jeweils zu einem Zeichenfeld mit der Größe $2 \cdot 3$ zusammengefaßt. Damit ergeben sich $40 \cdot 24 = 960$ Zeichenfelder pro Seite. Die grafischen Muster sind in acht Farben darstellbar, wobei innerhalb eines Zeichenfeldes nur eine Farbe möglich ist. Die Codierung der grafischen Muster erfolgt im Raster der Zeichenfelder.

Ein grafisches Muster kann über eine Editiertastatur aufgebaut werden. Dabei werden über entsprechende Tasten die einzelnen Grafikelemente belegt. Innerhalb des vorgegebenen Rasters sind damit Eingaben an beliebigen Positionen möglich, bis das darzustellende Muster den gewünschten Vorstellungen entspricht. Eine Darstellung von umfangreichen grafischen Mustern unter Verwendung der Editiertastatur erfordert jedoch einen erheblichen Zeitaufwand.

Ret 1 Fra / 29.9.1980

Weiterhin ist es möglich, grafische Muster durch Abtasten einer entsprechenden Vorlage einzugeben. Die Abtastung kann unter Verwendung einer Fernsehkamera oder mit Hilfe eines Abtasters erfolgen, der die Vorlage zeilenweise abtastet. Zweckmäßigerweise werden die Vorlagen bereits in dem aus den Grafikelementen gebildeten Raster dargestellt. Nach der Abtastung werden die den Zeilen der Grafikvorlage zugeordneten Binärzeichen für eine weitere Verarbeitung üblicherweise in einen Primärspeicher gespeichert.

Falls für eine Erstellung einer Seite ein grafisches Muster gewünscht wird, das kleiner ist als das auf der Vorlage dargestellte grafische Muster, wäre es denkbar, eine neue Vorlage zu erstellen, auf der das grafische Muster in der richtigen Größe dargestellt ist und diese Vorlage erneut abzutasten. Dies erfordert jedoch einen großen Aufwand. Weiterhin wäre es denkbar, bei der Abtastung der Vorlage durch eine Fernsehkamera diese mit einem Zoom-Objektiv zu versehen und die Brennweite so zu verändern, daß die Vorlage mit der geeigneten Größe in der Fernsehkamera abgebildet wird. Ein derartiges Verfahren erfordert jedoch eine mechanische Einstellung des Objektivs.

Der Erfindung liegt daher die Aufgabe zugrunde, ein Verfahren und eine Anordnung anzugeben, mit der abgetastete grafische Muster auf einfache Weise verkleinert werden können.

Erfindungsgemäß wird die Aufgabe bei dem Verfahren der eingangs genannten Art gelöst durch die zeitliche Aufeinanderfolge folgender Verfahrensschritte:

a) Jeweils eine Anzahl m von aufeinanderfolgenden Binärzeichen jeder Zeile wird zu einem ersten Datenwort zusammengefaßt,

0048941
80 P 2411 E

b) jedem ersten Datenwort wird ein zweites Datenwort zugeordnet, das eine Anzahl n von Binärzeichen enthält, wobei n kleiner als m ist und wobei die Verteilung der Binärwerte der Binärzeichen in den zweiten Datenwörtern der Verteilung der Binärwerte in den ersten Datenwörtern möglichst ähnlich ist,

c) die zweiten Datenwörter werden in einem Bildspeicher gespeichert,

d) jeweils eine Anzahl k von Spalten der grafischen Muster darstellende Binärzeichen im Bildspeicher werden zu einem dritten Datenwort zusammengefaßt,

e) jedem dritten Datenwort wird ein viertes Datenwort zugeordnet, das eine Anzahl l von Binärzeichen enthält, wobei l kleiner als k ist und wobei die Verteilung der Binärwerte der Binärzeichen den vierten Datenwörtern der Verteilung der Binärwerte in den dritten Datenwörtern möglichst ähnlich ist,

f) die vierten Datenwörter werden im Bildspeicher gespeichert und an einer Ausgabeeinheit ausgegeben.

Das Verfahren gemäß der vorliegenden Erfindung hat den Vorteil, daß die Veränderung der Größe der grafischen Muster ausschließlich auf elektronische Weise erfolgt. Die Veränderung der Größe erfolgt sehr schnell. Ein Erstellen einer weiteren Vorlage ist nicht erforderlich und es sind keine mechanischen Einstellungen notwendig, wenn die Vorlage abgetastet ist.

Das Verfahren erfordert einen geringen Aufwand, wenn die Anzahl m mit der Anzahl k und die Anzahl n mit der Anzahl l übereinstimmt und wenn die Erzeugung der zweiten und vierten Datenwörter auf die gleiche Weise erfolgt. In diesem Fall wird die Größe des grafischen Musters in Zeilen- und in Spaltenrichtung im selben Maßstab verkleinert.

Falls die grafischen Muster mehrere Farben aufweisen, ist es zweckmäßig, wenn weitere Datenwörter erzeugt werden, die die Verteilung der Farben kennzeichnen. Falls beispielsweise bei der Verkleinerung die Anzahl aller Binärzeichen nicht gleichmäßig verändert wird, muß durch die weiteren Datenwörter festgelegt werden, welche Grafikelemente durch welche Farben belegt werden.

Für die Verkleinerung der mehrfarbigen grafischen Muster ist es vorteilhaft, wenn die mehrfarbigen grafischen Muster in entsprechender Weise wie schwarz/weiße grafische Muster durch die Binärzeichen dargestellt werden. Beispielsweise wird die Farbe weiß durch den Binärwert 0 dargestellt, während alle übrigen Farben durch den Binärwerte 1 dargestellt werden.

Eine vorteilhafte Anordnung zur Durchführung des Verfahrens ist dadurch gekennzeichnet, daß eine Steuereinheit vorgesehen ist, die jeweils die Anzahl m bzw. k Binärzeichen zu den ersten bzw. dritten Datenwörtern zusammenfaßt, daß mindestens ein Zuordner vorgesehen ist, der den ersten bzw. dritten Datenwörtern die zweiten bzw. vierten Datenwörter zuordnet und wenn ein Bildspeicher vorgesehen ist, in dem die zweiten und vierten Datenwörter eingespeichert werden.

Eine vorteilhafte erste Ausführungsform der Anordnung wird erreicht, wenn der Zuordner einen Festwertspeicher enthält, dessen Adresseneingängen die ersten bzw. dritten Datenwörter zugeführt werden und in dem die zweiten bzw. vierten Datenwörter gespeichert sind.

Eine weitere vorteilhafte Ausführungsform der Anordnung ist dadurch gekennzeichnet, daß der Zuordner eine Verarbeitungseinheit enthält, die nach einem vorgegebenen Algorithmus aus den ersten bzw. dritten Datenwörtern die zweiten bzw. vierten Datenwörter erzeugt.

Um nach einer Verkleinerung des grafischen Musters gegebenenfalls auf das ursprüngliche grafische Muster zurückgreifen zu können, ist es vorteilhaft, wenn der Steuereinheit ein Primärspeicher vorgeschaltet ist, in dem das grafische Muster zeilenweise durch die Binärzeichen gespeichert ist.

Falls die in der Größe veränderten grafischen Muster in einem bestimmten Format ausgegeben werden müssen, ist es vorteilhaft, wenn dem Bildspeicher eine Ausgabesteuerung nachgeschaltet ist, die die vierten Datenwörter in ein für eine Ausgabe geeignetes Format umsetzen und wenn der Ausgabesteuerung über einen Ausgabespeicher eine Ausgabeeinheit nachgeschaltet ist, an der das verkleinerte grafische Muster ausgebbar ist.

Im folgenden wird eine Durchführung des Verfahrens anhand von Zeichnungen näher erläutert. Es zeigen
Fig. 1 eine Anordnung zur Durchführung des Verfahrens,
Fig. 2 eine Darstellung einer Verkleinerung einer Zeile,
Fig. 3 eine Darstellung einer Verkleinerung eines grafischen Musters in Zeilen- und Spaltenrichtung.

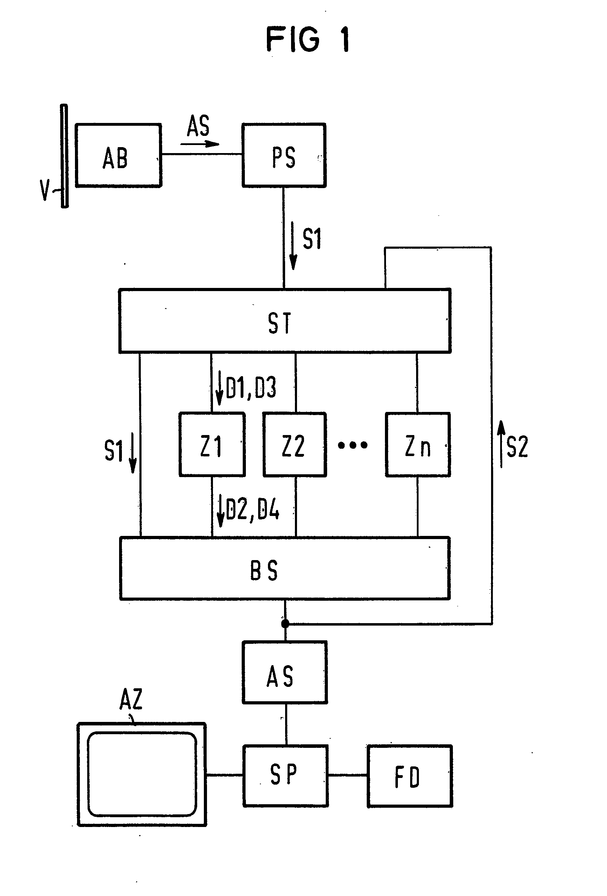

Bei der in Fig. 1 dargestellten Anordnung wird eine Vorlage V unter Verwendung einer Abtasteinheit AB zeilenweise optisch abgetastet. Die Abtastsignale AS werden einem Primärspeicher PS zugeführt, der jedem abgetasteten Grafikelement auf der Vorlage V zugeordnete Binärzeichen zeilenweise speichert. Bei "Bildschirmtext" werden alle Grafikelemente entsprechend ihrer Farbe durch mehrere Binärzeichen codiert. Für die Verkleinerung selbst, ohne Berücksichtigung der Farbe, ist es jedoch ausreichend, wenn

Grafikelemente mit der Farbe weiß durch Binärzeichen mit
den Binärwerten 0 und Grafikelemente mit allen anderen
Farben durch Binärzeichen mit den Binärwerten 1 dargestellt werden. Die jeweils einer Zeile zugeordneten Binärzeichen werden als Signale S1 einer Steuereinheit ST
zugeführt. Falls die grafischen Muster ohne eine Größenänderung an einer Anzeigeeinheit AZ dargestellt werden
sollen, gelangen die Signale S1 über einen Bildspeicher
BS zu einer Ausgabesteuerung AS, die die Binärzeichen in
ein entsprechendes Format umsetzt und anschließend in
einem Ausgabespeicher SP speichert. Neben der Anzeigeeinheit AZ kann an dem Ausgabespeicher auch ein permanenter Speicher FD angeschlossen sein, der beispielsweise
als Floppy-Disk-Gerät ausgebildet ist.

Bei einer Verkleinerung des grafischen Musters faßt die
Steuereinheit ST jeweils eine vorgegebene Anzahl m von
durch die Signale S1 dargestellten Binärzeichen zu einem
ersten Datenwort D1 zusammen. Diese Datenwörter D1 werden,
in Abhängigkeit von der gewünschten Verkleinerung einem
der Zuordner Z1 bis Zn zugeführt. Die Zuordner Z ordnen
den Datenwörtern D1 Datenwörter D2 zu, die in Abhängigkeit von der gewünschten Verkleinerung eine kleinere Anzahl n von Binärzeichen enthalten, wobei darauf geachtet
wird, daß die Verteilung der Binärwerte der Binärzeichen
in den Datenwörtern D2 möglichst ähnlich ist der Verteilung der Binärwerte der Binärzeichen in den Datenwörtern
D1.

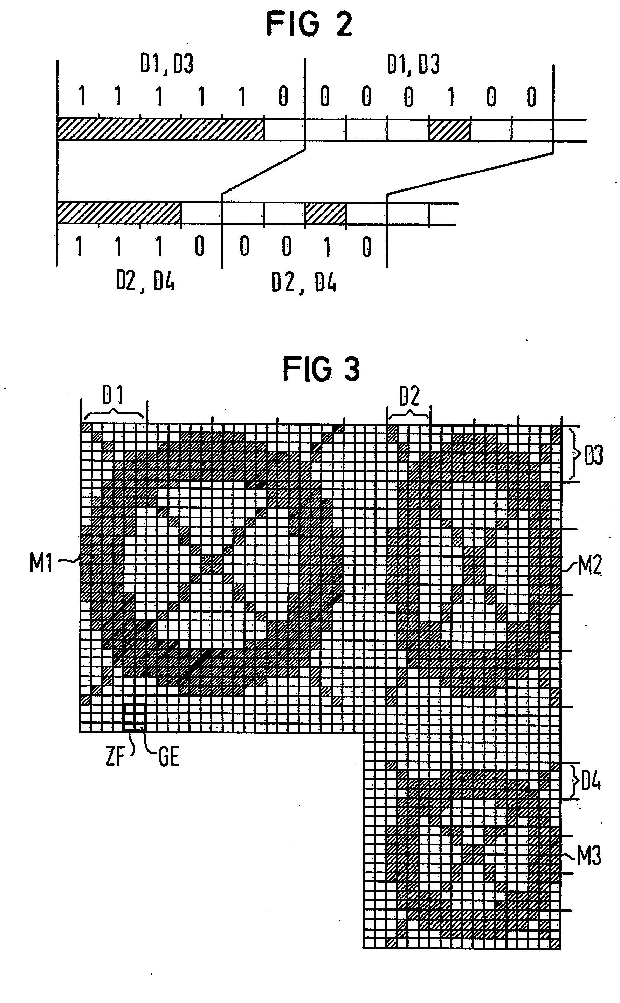

Bei der Darstellung in Fig. 2 wird angenommen, daß eine
Verkleinerung des grafischen Musters auf zwei Drittel
seiner Größe erfolgt. Jeweils sechs einer Zeile zugeordnete Binärzeichen werden zu einem Datenwort D1 zusammengefaßt. Der Zuordner Z1 erzeugt die Datenwörter D2, die
jeweils 4 Binärzeichen enthalten.

Die Verteilung der Binärwerte in den Datenwörtern D2 ist derart gewählt, daß die Struktur des grafischen Musters der Zeile möglich erhalten bleibt.

Die Zuordnung der Datenwörter D2 zu den Datenwörtern D1 erfolgt beispielsweise tabellarisch. Zu diesem Zweck enthalten die Zuordner Z Festwertspeicher, in denen die Datenwörter D2 gespeichert sind und die durch die entsprechenden Datenwörter D1 über die Adresseneingänge abrufbar sind. Ein Ausschnitt aus einer entsprechenden Tabelle ist in der Tabelle 1 dargestellt.

| D1/D3 | D2/D4 | D5 |
|---|---|---|
| 0 0 0 0 0 0 | 0 0 0 0 | 0 0 0 0 0 0 |
| 0 0 0 0 0 1 | 0 0 0 1 | 0 0 0 0 0 1 |
| 0 0 0 0 1 0 | 0 0 0 1 | 0 0 0 0 1 0 |
| 0 0 0 0 1 1 | 0 0 0 1 | 0 0 0 0 0 1 |
| 0 0 0 1 0 0 | 0 0 1 0 | 0 0 0 1 0 0 |
| 0 0 0 1 0 1 | 0 0 1 1 | 0 0 0 1 0 1 |
| ⋮ | ⋮ | ⋮ |
| 1 1 1 0 1 0 | 1 1 0 1 | 1 1 0 0 1 0 |
| 1 1 1 0 1 1 | 1 1 0 1 | 1 1 0 0 1 1 |
| 1 1 1 1 0 0 | 1 1 1 0 | 1 1 1 0 0 0 |
| 1 1 1 1 0 1 | 1 1 0 1 | 0 1 1 0 0 1 |
| 1 1 1 1 1 0 | 1 1 1 0 | 0 1 1 1 0 0 |
| 1 1 1 1 1 1 | 1 1 1 1 | 0 1 1 1 1 0 |

Die Zuordner Z können, um Speicherplatz einzusparen, auch eine Verarbeitungseinheit enthalten, die in Abhängigkeit von den Datenwörtern D1 nach einem vorgegebenen Algorithmus die Datenwörter D2 erzeugt. In bestimmten Fällen können die Binärwerte der Datenwörter D2 in Abhängigkeit von vorangehenden oder nachfolgenden Binärzeichen in den Datenwörtern D2 festgelegt werden. Ein Beispiel einer derartigen Zuordnung ist in Tabelle 2 dargestellt.

| D1/D3 | D2/D4 | Bemerkung |
|-------|-------|-----------|
| 0 0 0 | 0 0 | |
| 0 0 1 | 0 1 | |
| 0 1 0 | 0 1 | wenn 1 vorausgeht |
|       | 1 0 | wenn 0 vorausgeht |
| 0 1 1 | 0 1 | |
| 1 0 0 | 1 0 | |
| 1 0 1 | 1 0 | wenn 0 vorausgeht |
|       | 0 1 | wenn 1 vorausgeht |
| 1 1 0 | 1 0 | |
| 1 1 1 | 1 1 | |

Hier werden für eine Verkleinerung auf zwei Drittel jeweils nur drei Binärzeichen zu einem Datenwort D1 zusammengefaßt und der Zuordner Z1 gibt Datenwörter D2 mit jeweils zwei Binärzeichen ab.

Die Zuordner Z2 bis Zn sind für weitere Veränderungsmaßstäbe vorgesehen. In jedem Fall werden bei Verkleinerungen einzelne Binärzeichen aus den Datenwörtern D1 entfernt. Grundsätzlich ist es auch möglich, Vergrößerungen vorzunehmen. In diesem Fall werden weitere Binärzeichen hinzugefügt.

Falls die Verkleinerung nicht nur in Zeilenrichtung sondern auch in Spaltenrichtung erfolgen soll, werden aus dem Bildspeicher BS spaltenweise zusammengefaßte Binärzeichen ausgelesen und als Signale S2 der Steuereinheit ST zugeführt. Die Steuereinheit ST faßt eine Anzahl k von Binärzeichen zu Datenwörtern D3 zusammen und einer der Zuordner Z ordnet diesen Datenwörtern D3 in entsprechender Weise wie den Datenwörtern D1 Datenwörter D4 zu, die eine geringere Anzahl l von Binärzeichen enthalten. Die Datenwörter D4 werden anschließend wieder in dem Bildspeicher BS gespeichert. Sie stellen das verkleinerte grafische Muster dar. Falls in Zeilen- und in Spaltenrichtung die gleiche Veränderung erfolgt, wird zweckmäßigerweise der gleiche Zuordner Z für die Datenwörter D1 und D3 verwendet.

Die Ausgabesteuerung AS setzt anschließend die Binärzeichen der Datenwörter D4 in ein für die Ausgabe geeignetes Format um und speichert die das ausgabefähige grafische Muster darstellenden Binärzeichen in den Ausgabespeicher SP ein. Das veränderte grafische Muster kann an der Anzeigeeinheit AZ ausgegeben oder auf dem Speichermedium des Speichers FD gespeichert werden.

Falls das grafische Muster mehrere Farben enthält und bei einer Verkleinerung die Datenwörter D2 und D4 weniger Binärwerte 1 enthalten als die Binärwerte D1 bzw. D2 muß entschieden werden, welche Farbe eliminiert wird. Dies erfolgt mit Hilfe von weiteren Datenwörtern D5, die in Ta-belle 1 ebenfalls dargestellt sind und die ebenfalls durch die Zuordner Z erzeugt werden. Dort sind diejenigen Grafikelemente mit dem Binärwert 1 gekennzeichnet, deren Farbe erhalten bleibt.

Bei der Darstellung in Fig. 3 wird angenommen, daß ein grafisches Muster M1 sowohl in Zeilenrichtung als auch in Spaltenrichtung auf zwei Drittel seiner Größe verkleinert werden soll. Es wird angenommen, daß das grafische Muster M1 nur die Farben schwarz und weiß enthält. Das grafische Muster ist in einem Raster dargestellt, das für eine Abtastung für den Telekommunikationsdienst "Bildschirmtext" geeignet ist. Das Raster wird aus einzelnen Grafikelementen GE gebildet. Jeweils sechs Grafikelemente GE bilden ein Zeichenfeld ZF. Es wird aus Gründen der Verständlichkeit angenommen, daß das grafische Muster im Primärspeicher PS gespeichert

0048941

ist, wobei die Farbe schwarz durch den Binärwert 1 und die Farbe weiß durch den Binärwert 0 dargestellt wird.

Wie bereits erwähnt, liest die Steuereinheit ST aus dem Primärspeicher PS die den Zeilen zugeordneten Binärzeichen aus und faßt jeweils sechs zu einem Datenwort D1 zusammen. Unter Verwendung des Zuordners Z1 wird das entsprechende Datenwort D2 erzeugt, das vier Binärzeichen enthält. Die Datenwörter D2 werden anschließend im Bildspeicher BS gespeichert. Sie stellen die Binärzeichen des Musters M2 dar. Aus dem Bildspeicher BS werden anschließend die den Spalten des Musters M2 zugeordneten Binärwerte ausgelesen, um die Datenwörter D3 zu erzeugen. Dabei werden ebenfalls jeweils sechs Binärzeichen zu einem Datenwort D3 zusammengefaßt. Diesen Datenwörtern D3 werden die Datenwörter D4 mit jeweils 4 Binärzeichen zugeordnet, die das verkleinerte Muster M3 darstellen. Das Muster M3 entspricht dem auf zwei Drittel seiner Größe verkleinerten Muster M1, wobei das Muster M3 im gleichen Raster angeordnet ist wie das Muster M1. Nach einer entsprechenden Verarbeitung in der Ausgabesteuerung AS werden den im Bildspeicher BS gespeicherten Binärzeichen Codezeichen zugeordnet, die im Ausgabespeicher SP gespeichert werden und mit denen das verkleinerte grafische Muster an der Anzeigeeinheit AZ darstellbar ist.

9 Patentansprüche
3 Figuren

0048941

Patentansprüche

1. Verfahren zum Verkleinern von grafischen Mustern, die durch Binärzeichen codiert sind und die in Zeilen und Spalten eines vorgegebenen Rasters dargestellt werden, gekennzeichnet durch die zeitliche Aufeinanderfolge folgender Verfahrensschritte:

a) jeweils eine Anzahl m von aufeinanderfolgenden Binärzeichen jeweils einer Zeile wird zu einem ersten Datenwort (D1) zusammengefaßt,

b) jedem ersten Datenwort (D1) wird ein zweites Datenwort (D2) zugeordnet, das eine Anzahl n von Binärzeichen enthält, wobei n kleiner als m ist und wobei die Verteilung der Binärwerte der Binärzeichen in den zweiten Datenwörtern (D2) der Verteilung der Binärwerte in den ersten Datenwörtern (D1) möglichst ähnlich ist,

c) die zweiten Datenwörter (D2) werden in einem Bildspeicher (BS) gespeichert,

d) jeweils eine Anzahl k von Spalten des grafischen Musters (M2) darstellenden Binärzeichen im Bildspeicher (BS) werden zu einem dritten Datenwort (D3) zusammengefaßt,

e) jedem dritten Datenwort (D3) wird ein viertes Datenwort (D4) zugeordnet, das eine Anzahl l von Binärzeichen enthält, wobei l kleiner als k ist und wobei die Verteilung der Binärwerte der Binärzeichen in den vierten Datenwörtern (D4) der Verteilung der Binärwerte in den dritten Datenwörtern (D3) möglichst ähnlich ist,

f) die vierten Datenwörter werden im Bildspeicher (BS) gespeichert und an einer Ausgabeeinheit (AZ, FD) ausgegeben.

2. Verfahren nach Anspruch 1, d a d u r c h   g e - k e n n z e i c h n e t ,   daß die Anzahl m mit der Anzahl k und die Anzahl n mit der Anzahl l übereinstimmt

und daß die Erzeugung der zweiten und vierten Datenwörter (D2, D4) auf die gleiche Weise erfolgt.

3. Verfahren nach Anspruch 1 oder Anspruch 2, bei dem mehrfarbige grafische Muster verarbeitet werden, d a - d u r c h   g e k e n n z e i c h n e t ,   daß weitere Datenwörter (D5) erzeugt werden, die die Verteilung der Farben kennzeichnen.

4. Verfahren nach einem der Ansprüche 1 bis 3, bei dem mehrfarbige grafische Muster verarbeitet werden, d a - d u r c h   g e k e n n z e i c h n e t ,   daß die mehrfarbigen grafischen Muster in entsprechender Weise wie schwarz/weiße grafische Muster durch Binärzeichen dargestellt werden.

5. Anordnung zur Durchführung des Verfahrens nach An- spruch 1, d a d u r c h   g e k e n n z e i c h n e t , daß eine Steuereinheit (ST) vorgesehen ist, die jeweils die Anzahl m bzw. k Binärzeichen zu den ersten bzw. dritten Datenwörtern (D1 bzw. D3) zusammenfaßt, daß mindestens ein Zuordner (Z) vorgesehen ist, der den ersten bzw. dritten Datenwörtern (D1 bzw. D3) die zweiten bzw. vierten Datenwörter (D2 bzw. D4) zuordnet und daß ein Bildspeicher (BS) vorgesehen ist, in den die zweiten und vierten Datenwörter (D2 und D4) eingespeichert werden.

6. Anordnung nach Anspruch 5, d a d u r c h   g e - k e n n z e i c h n e t ,   daß der Zuordner (Z) einen Festwertspeicher enthält, dessen Adresseneingängen die ersten bzw. dritten Datenwörter (D1 bzw. D3) zugeführt werden und in dem die zweiten bzw. vierten Datenwörter (D2 bzw. D4) gespeichert sind.

7. Anordnung nach Anspruch 5, d a d u r c h   g e -
k e n n z e i c h n e t ,   daß der Zuordner (Z) eine
Verarbeitungseinheit enthält, die nach einem vorgegebenen Algorithmus aus den ersten bzw. dritten Datenwörtern
(D1 bzw. D3) die zweiten bzw. vierten Datenwörter (D2
bzw. D4) erzeugt.

8. Anordnung nach einem der Ansprüche 5 bis 7, d a -
d u r c h   g e k e n n z e i c h n e t ,   daß der
Steuereinheit ein Primärspeicher (PS) vorgeschaltet
ist, in dem die grafischen Muster zeilenweise durch
die Binärzeichen gespeichert sind.

9. Anordnung nach einem der Ansprüche 5 bis 8, d a -
d u r c h   g e k e n n z e i c h n e t ,   daß dem
Bildspeicher (BS) eine Ausgabesteuerung (AS) nachgeschaltet ist, die die Binärzeichen der vierten Datenwörter in ein für eine Ausgabe geeignetes Format umsetzt und daß der Ausgabesteuerung (AS) über einen Ausgabespeicher (SP) eine Ausgabeeinheit (AZ, FD) nachgeschaltet ist, an der das verkleinerte grafische Muster
ausgebbar ist.

FIG 1

## FIG 2

D1, D3          D1, D3

1  1  1  1  1  0    0  0  0  1  0  0

1  1  1  0    0  0  1  0

D2, D4          D2, D4

## FIG 3

D1                    D2

D3

M1                    M2

ZF   GE

D4

M3